# NEUE EUROPÄISCHE PATENTSCHRIFT

(11) **EP 2 452 829 B2**
(45) Veröffentlichungstag und Bekanntmachung des Hinweises auf die Entscheidung über den Einspruch: **12.07.2017**
(45) Hinweis auf die Patenterteilung: 26.06.2013
(21) Anmeldenummer: 10014439.3
(22) Anmeldetag: 10.11.2010
(51) Int. Cl.: B44F 9/02, B44C 5/04

(54) **Verfahren zum Aufbringen eines Dekors auf eine Holzwerkstoffplatte**
Method for applying a decoration to a wooden material board
Procédé d'application d'un décor sur une plaque de matière dérivée du bois

(43) Veröffentlichungstag der Anmeldung: 16.05.2012
(60) Teilanmeldung: 13002615.6
(73) Patentinhaber: Flooring Technologies Ltd., Pieta PTA 9044 (MT)
(72) Erfinder: Kalwa, Norbert, Dr., 32805 Horn-Bad Meinberg (DE)
(74) Vertreter: Rehmann, Thorsten

(56) Entgegenhaltungen:
- EP-A1- 1 762 400
- EP-A1- 1 839 884
- EP-A2- 1 454 763
- EP-A2- 2 098 380
- WO-A1-2011//110373
- WO-A9-2009//087440
- US-A1- 2007 196 624
- US-A1-2005/0 249 924

## Beschreibung

Die Erfindung betrifft ein Verfahren zum Aufbringen eines Dekors auf eine Holzwerkstoffplatte, insbesondere eine MDF- oder HDF-Platte.

Ein solches Verfahren ist beispielsweise aus der DE 10 2007 012 236 A1 bekannt. Auf die Oberfläche einer Holzwerkstoffplatte, die beispielsweise anschließend zu Fußbodenpaneelen weiterverarbeitet oder als Möbelplatte verwendet werden kann, wird zunächst eine Dekorschicht aufgebracht. Auf die Dekorschicht wird eine versiegelnde Lackschicht aufgetragen und in die vollständig ausgehärtete Lackschicht eine Struktur eingeprägt. Die Strukturierung erfolgt mit einem Prägekalandar oder einer Taktpresse unter Temperatur- und Druckbeaufschlagung. Vor dem Aufbringen der Dekorschicht auf die Oberseite der Trägerplatte kann zuvor eine Farbschicht als Trägerschicht aufgedruckt werden. Die Trägerschicht kann auch aus Papier bestehen. Bevorzugt ist das Dekor der Dekorschicht eine Holz- oder Steinreproduktion. Anstelle eines Holzdekors kann aber auch eine Kork-, Leder- oder Fliesenoptik hergestellt werden. Durch die in die Lackschicht eingeprägte Struktur, die beispielsweise zu der Maserung eines Holzdekors oder der Aderung der Steinreproduktion korrespondiert, wird eine besonders natürliche Optik der veredelten Holzwerkstoffplatte erzielt.

Aus der EP 1 918 095 A1 ist eine Holzwerkstoffplatte mit einem Kern aus Holzwerkstoff bekannt, die auf Ihrer Oberseite eine Echtholz-Furnierschicht aufweist. Die Oberfläche der Furnierschicht ist mit mindestens einem, das Dekor verändernden Farbauftrag bedruckt. Der Druck erfolgt so, dass sich das Dekor des Furnieres optisch zu einem anderen Echtholz-Dekor verändert. Die Furnierschicht kann analog und digital bedruckt werden.

Seit der Einführung des Digitaldruckes in der Holzwerkstoffindustrie werden immer mehr Produkte mit Hilfe dieser Technologie veredelt. Die Gründe dafür sind vielfältig. Der wesentliche Grund zur Anwendung des Digitaldruckes besteht darin, dass sich gegenüber analogen Druckverfahren (Tiefdruck) deutlich bessere Druckqualitäten erzielen lassen. Zum einen sind mit einem Digitaldruck höhere Auflösungen erreichbar und zum anderen ist der Digitaldruck nicht wie beispielsweise der Tiefdruck in Bezug auf die möglichen Farben eingeschränkt. Durch die Verwendung eines Digitaldruckes lassen sich folglich neue Farbräume erschließen, die mittels eines Tiefdruckverfahren nicht zugänglich sind. Im Analogdruck werden Druckwalzen mit einem Umfang von bis zu ca. 1,4m verwendet. Die Holzwerkstoffplatten können aber in jeder gewünschten Länge, und sogar endlos hergestellt werden. Durch die Beschränkung der Walzenumfänge wiederholt sich das Druckmotiv dann immer wieder. Werden die Holzwerkstoffplatten anschließend in einzelne Paneele aufgeteilt und beispielsweise als Fußbodenbelag verwendet, ergibt sich ein künstliches Dekorbild, das sich durch die Wiederholungen des Dekors an verschiedenen Stellen im Bodenbelag immer wiederfindet. Der Bodenbelag ist als "künstliches" Produkt erkennbar. Echtholzpaneele oder Natursteinfliesen weisen kein sich wiederholendes Dekor auf. Jedes Echtholz-Paneel/jede Natursteinfliese ist mit einem individuellen Dekor versehen, sodass kein Fußbodenpaneel dem anderen gleicht. Das Dekor ist zufällig über den Bodenbelag verteilt.

Im Digitaldruck können Dekore realisiert werden, die sich erst nach deutlich mehr als 40m wiederholen. Im Prinzip sind sogar Dekore gänzlich ohne Wiederholungen möglich. Auch im Hinblick auf die Farbräume stehen mit dem Digitaldruck erheblich größere Möglichkeiten als beim Analogdruck zur Verfügung. Im Digitaldruck können also Holzwerkstoffplatten veredelt werden, deren Dekor zufällig verteilt ist und wenn solche Holzwerkstoffplatten später dann zu Fußbodenbelägen weiterverarbeitet werden, wird eine zufällige Verteilung des Dekors erreicht, wie es bei Echtholz- oder Naturstein-Böden üblich ist.

Aus der EP-A-2098380 ist ein Verfahren bekannt, wobei auf ein bereits geprägtes Profil der Holzwerkstoffplatten, ein im Digitaldruck erzeugtes Dekor aufgebracht wird.

Nachteilig beim Einsatz des Digitaldruckes ist aber, dass die Druckfarben deutlich teurer sind als die Druckfarben für den Tiefdruck. Aus diesem Grund liegen die Herstellkosten digital bedruckter Holzwerkstoffplatten deutlich über denen analog bedruckter Platten. Zudem ist der Digitaldruck noch langsamer als der Tiefdruck, was ebenfalls höhere Herstellungskosten zur Folge hat.

Hiervon ausgehend soll das Verfahren zum Aufbringen eines Dekors auf die Oberseite einer Holzwerkstoffplatte, insbesondere einer MDF- oder HDF-Platte verbessert werden.

Zur Problemlösung zeichnet sich das beschriebene Verfahren dadurch aus, dass auf ein erstes im Tiefdruck erzeugtes Dekor mindestens ein zweites, im Digitaldruck erzeugtes Dekor aufgebracht wird. Durch die Kombination aus Tief- und Digitaldruck wird zunächst im klassischen Tiefdruck eine "Grundierung" aufgebracht. Bei einem Holzdekor handelt es sich dabei beispielsweise um die Farben, die für den Grundfarbton verantwortlich sind. Mit dem Digitaldruck werden anschließend die Maserung, die Astlöcher und andere dekorative Elemente auf den Tiefdruck aufgebracht. Damit ist sichergestellt, dass Dekore erzeugt werden können, die ohne sich wiederholende Bereiche gedruckt sind. Die notwendige großflächige Bedruckung erfolgt mit dem kostengünstigen Tiefdruckverfahren und die "mehr filigrane" Bedrukkung mit dem teureren Digitaldruckverfahren. Da mit dem erfindungsgemäßen Verfahren der Anteil des mittels des langsameren Digitaldruckes gedruckten Dekors nur relativ gering ist, da die großfläche Bedruckung mit dem Tiefdruckverfahren erfolgt, wird im Vergleich zu einer vollständigen Bedruckung im Digitaldruck die benötigte Herstellungszeit reduziert und somit die Produktivität gesteigert. Auch dies trägt zur Kostensenkung bei.

Von besonderem Vorteil ist bei dieser Lösung, dass die beiden Druckapplikationen entweder direkt nacheinander in einer Anlage oder in zwei nacheinandergeschalteten Arbeitsprozessen aufgebracht werden können. Dies könnte beispielsweise als ein arbeitsteilig erledigter Prozess stattfinden.

Ein "random design", also eine zufällige Verteilung der einzelnen Dekorelemente, wird damit besonders einfach möglich, so dass damit eine Wiederholung im Dekor zumindest nahezu ausgeschlossen werden kann, wenn sie nicht gewünscht ist.

In einer besonders bevorzugten Ausführungsform werden in einer Anlage bereits fertig zugeschnittene Holzwerkstoffplatten durch unterschiedliche Geschwindigkeiten von Förderbändern zu einer "Endlosplatte" zusammengeschoben. Die einzelnen Holzwerkstoffplatten werden also so dicht hintereinander angeordnet, dass zwischen ihnen nur noch ein minimaler, vorzugsweise kein, Abstand liegt.

Erfindungsgemäß wird die Oberseite der Holzwerkstoffplatte unmittelbar, also ohne Papierlage, im Tiefdruck bedruckt und anschließend die Digitaldrucktechnik eingesetzt.

Vor dem analogen Aufdrucken des Dekors wird auf die Oberseite der Holzwerkstoffplatte eine Versiegelungsschicht als Grundierschicht aufgebracht. Hierzu kann es vorteilhaft sein, die Oberseite vor der weiteren Behandlung zu schleifen, was natürlich auch ohne zusätzliches Aufbringen der Dekorschicht vorteilhaft sein kann.

Da die beiden Dekore unmittelbar auf die Oberseite der Platte aufgedruckt werden, entfällt nicht nur die bekannte, mit dem Papierwachstum verbundene Problematik, sondern auch das Handling, das mit dem Auflegen der Papierbahn auf die Plattenoberseite verbunden ist, wodurch die Herstellung vereinfacht wird.

Eine mögliche Schrittfolge für die Veredelung einer Holzwerkstoffplatte ergibt sich wie folgt:
a) Auftragen einer Versiegelungsschicht aus Melaminharz auf die Oberseite der Platte,
b) Aufdrucken eines ersten Dekors auf die Versiegelungsschicht im Tiefdruckverfahren,
c) Aufdrucken eines zweiten Dekors auf das erste Dekor mit einem Digitaldrucker,
d) Auftragen einer Schutzschicht aus Melaminharz auf beide Dekore,
e) Verpressen der Platte unter Temperatureinwirkung, bis die Schutzschicht und die Versiegelungsschicht schmelzen und sich unter Einschluss des aufgedruckten ersten und zweiten Dekors miteinander verbinden.

Durch das Aufbringen der Versiegelungsschicht auf die Oberseite der Holzwerkstoffplatte wird verhindert, dass die Druckfarbe von der Holzwerkstoffplatte aufgesaugt wird, was ohne die Versiegelungsschicht der Fall wäre, da die Holzwerkstoffplatte als solche saugfähig ist. Durch die Versiegelungsschicht wird die Dekorfarbe an der Oberfläche gehalten und gebunden, sodass die erste und zweite Dekorschicht an der Oberfläche bleiben und ein präzises, klar sichtbares Dekor ausbilden. Die Deckschicht als Schutzschicht aus Melaminharz ersetzt das bekannte Overlay, das bei den des weiteren bekannten Veredelungsverfahren auf das Dekorpapier aufgelegt wird. Durch das anschlie-βende Verpressen unter Temperatureinwirkung bis die Schutzschicht und die Versiegelungsschicht schmelzen, wird das Dekor eingeschlossen und die Versiegelungsschicht und die Schutzschicht werden zu einem Verbund. Mit Hilfe der Presse kann der Glanzgrad der Oberfläche eingestellt werden. Wird eine polierte Pressplatte verwendet, wird eine hochglänzenden Oberfläche erzielt.

Das Dekor kann auch auf die Unterseite der Holzwerkstoffplatte aufgebracht werden.

Die Versiegelungsschichten und/oder die Schutzschichten werden vorzugsweise in mehreren Einzelschichten aufgetragen, wobei jede Einzelschicht vor dem Auftragen der nächsten Schicht ausreichend trocknet. Auch die Druckfarbe kann im Analogdruck in mehreren Schichten aufgetragen werden. Damit das Dekor bzw. die Farbschicht beim Verpressen nicht schmilzt oder sich farblich verändert, muss eine entsprechend hitzebeständige Farbe bzw. ein hitzebeständiger Lack verwendet werden. Wird die Platte vor dem Auftragen der ersten Schicht geschliffen, wird eine besonders glatte Oberfläche anschließend erzielt. In die Schutzschicht kann zur Erhöhung der Abriebfestigkeit Korund eingemischt oder eingestreut werden. Auch können antibakterielle- und/oder antistatik-Additive eingemischt oder aufgestreut werden.

Die Veredelung der Oberseite der Platte kann auch nur bereichsweise erfolgen. Im Tiefdruck wird dann die gesamte Oberseite der Holzwerkstoffplatte in der

Grundfarbe bedruckt. Anschließend werden nur einzelne Bereiche im Digitaldruck behandelt. Beispielsweise bei einem Holzdekor werden die Maserung oder etwa gewünschte Astlöcher oder dergleichen im Digitaldruck aufgebracht. Damit ist es möglich, sehr kleine Losgrößen zu fertigen. Eine großformatige Holzwerkstoffplatte kann bei identischer Grundfarbe, die im Tiefdruck hergestellt wurde, mit unterschiedlichen Holzdekoren versehen werden. Aus der großformatigen Holzwerkstoffplatte können anschließend Paneele geschnitten werden, die in der Farbe identisch sind, sich in ihrem Holzdekor aber unterscheiden. So können verschiedene Holzdekore beispielsweise auch "vermischt" werden, wenn dies aus ästhetischen Gründen - beispielsweise bei der Objektgestaltung - gewünscht ist.

Außerdem ist es auch möglich, die Produktion sehr schnell umzustellen, indem ein anderes Dekor im Digitaldruck erzeugt wird, ohne die beim Tiefdruck verwendete Grundfarbe zu verändern. Die Flexibilität wird dadurch gesteigert.

Beim unmittelbaren Bedrucken der Oberseite einer Holzwerkstoffplatte können mehrere Digitaldrucker in Transportrichtung hintereinander angeordnet sein, um das zweite Dekor oder sogar ein weiteres oder mehrere weitere Dekore aufzudrucken. Auch können mehrere Tiefdruckeinrichtungen in Transportrichtung hintereinander vorgesehen sein, um das Dekor im Tiefdruck auf die Oberseite der Holzwerkstoffplatte aufzubringen.

## Patentansprüche

1. Verfahren zum Aufbringen eines Dekors auf eine Oberseite eines großformatigen Substrats, indem auf ein erstes, unmittelbar auf die Oberseite, im Tiefdruck aufgedrucktes Dekor mindestens ein zweites, im Digitaldruck erzeugtes Dekor aufgebracht wird und als Substrat eine großformatige Holzwerkstoffplatte, insbesondere MDF- oder HDF-Platte verwendet wird, auf die vor dem Aufdrucken des ersten Dekors eine Versiegelungsschicht als Grundierschicht aufgebracht wird, um zu verhindern, dass die Druckfarbe von der Holzwerkstoffplatte aufgesaugt wird, und wobei das erste Dekor die den Grundfarbton des fertigen Dekors bestimmenden Farben umfasst und das mindestens zweite Dekor die die Art des fertigen Dekors bestimmenden Details umfasst, und aus der großformatigen Holzwerkstoffplatte anschließend in der Farbe identische Paneele geschnitten werden, die sich in ihrem Dekor aber unterscheiden.

2. Verfahren nach Anspruch 1, **dadurch gekennzeichnet, dass** das zweite Dekor mit einer transparenten Deckschicht abgedeckt wird.

3. Verfahren nach Anspruch 1 oder 2, **dadurch gekennzeichnet, dass** die Oberseite der Holzwerkstoffplatte vor dem Aufbringen des Dekors geschliffen wird.

4. Verfahren nach einem der vorstehenden Ansprüche, **dadurch gekennzeichnet, dass** das Dekor ein natürliches Dekor imitiert und insbesondere ein Holzdekor.

5. Verfahren nach Anspruch 1, **dadurch gekennzeichnet, dass** das zweite Dekor keine sich in der Musterung wiederholende Bereiche aufweist.

6. Verfahren nach Anspruch 1 oder 5, **dadurch gekennzeichnet, dass** das zweite Dekor eine zufällige Musterung aufweist.

7. Verfahren nach Anspruch 2 und 4, **dadurch gekennzeichnet, dass** die Deckschicht eine zu dem Dekor vollständig korrespondierende Strukturprägung aufweist.

## Claims

1. A method for applying a decoration to an upper side of a large-format substrate by applying at least one second decoration which is produced using digital printing to a first decoration which is printed directly onto the upper side using gravure printing and using a large-format composite wood board, in particular MDF or HDF board as the substrate, onto which before the printing of the first decoration a sealing layer is applied as base coat, in order to prevent the printing ink from being absorbed by the composite wood board, and wherein the first decoration comprises the colors which define the basic color tone of the finished decoration and the at least second decoration comprises the details which define the type of the finished decoration, and subsequently panels of identical color are cut from the large-format composite wood board, which panels differ in terms of their decoration, however.

2. Method according to Claim 1, **characterized in that** the second decoration is covered with a transparent cover layer.

3. Method according to Claim 1 or 2, **characterized in that** the upper side of the composite wooden panel is sanded before applying the decoration.

4. Method according to one of the preceding claims, **characterized in that** the decoration imitates a natural decoration and is in particular a wood or stone decoration.

5. Method according to Claim 1, **characterized in that** the second decoration does not have any regions which repeat in the patterning.

6. Method according to Claim 1 or 5, **characterized in that** the second decoration has a random patterning.

7. Method according to Claims 2 and 4, **characterized in that** the cover layer has a structured embossing corresponding completely to the decoration.

## Revendications

1. Procédé pour appliquer un décor sur une face supérieure d'un substrat de grande taille, dans lequel on applique, sur un premier décor produit directement sur la face supérieure par impression en creux, au moins un second décor produit par impression numérique, et on utilise comme substrat une plaque en matériau dérivé du bois de grande taille, en particulier une plaque de MDF ou de HDF, sur laquelle on applique à titre de couche d'apprêt une couche de vitrification, avant l'impression du premier décor, afin d'empêcher que l'encre d'impression soit absorbée par la plaque en matériau dérivé du bois, et dans lequel le premier décor inclut les encres qui déterminent les couleurs de base du décor fini, et ledit au moins un second décor inclut les détails qui déterminent le genre du décor fini, et on découpe ensuite, à partir de la plaque en matériau dérivé du bois de grande taille, des panneaux identiques quant à leur couleur, mais qui diffèrent quant à leur décor.

2. Procédé selon la revendication 1, **caractérisé en ce que** le second décor est recouvert d'une couche de couverture transparente.

3. Procédé selon la revendication 1 2, **caractérisé en ce que** la face supérieure de la plaque en matériau dérivé du bois est poncée avant d'appliquer le décor.

4. Procédé selon l'une des revendications précédentes, **caractérisé en ce que** le décor imite un décor naturel et en particulier un décor en bois.

5. Procédé selon la revendication 1, **caractérisé en ce que** le second décor ne présente pas de zones répétitives dans le motif.

6. Procédé selon la revendication 1 ou 5, **caractérisé en ce que** le second décor présente un motif aléatoire.

7. Procédé selon la revendication 2 et 4, **caractérisé en ce que** la couche de couverture présente un relief structuré correspondant complètement au décor.
